# EUROPEAN PATENT SPECIFICATION

(11) **EP 1 356 214 B1**
(45) Date of publication and mention of the grant of the patent: **16.07.2008**
(21) Application number: 02710992.5
(22) Date of filing: 29.01.2002
(51) Int. Cl.: F16D 65/12

(54) **METHOD AND APPARATUS FOR BRAKE DISC CONTROL**
METHODE UND VORRICHTUNG ZUR KONTROLLE VON BREMSSCHEIBEN
PROCEDE ET APPAREIL DE COMMANDE DE DISQUE DE FREIN

(30) Priority: 30.01.2001 GB 0102328
(43) Date of publication of application: 29.10.2003
(73) Proprietor: Delphi Technologies, Inc., Troy, MI 48007 (US)
(72) Inventor: BAYLIS, Christopher, Stanford, Hexham, Northumberland, NE44 5LW (GB); HUDSON, Simon, Rugby, Warwickshire CV22 7NJ (GB)
(74) Representative: Lamb, Richard Andrew
(86) International application number: PCT/GB2002/000369
(87) International publication number: WO 2002/061300

(56) References cited:
- DE-A- 19 804 426
- FR-A- 2 056 625
- US-A- 3 630 320
- US-A- 3 729 067
- US-A- 4 540 067
- US-A- 6 135 247

## Description

This invention relates to a method and apparatus for brake disc control. More specifically, the invention relates to brake disc control in disc brakes of the kind comprising at least one axially slidable brake disc mounted for rotation on a rotatable mounting hub and which is shifted axially by engagement with a corresponding friction element when the brake is applied. In a specific embodiment described below such a brake is a spot-type automotive disc brake intended for use, for example, in relation to small to medium size cars and automobiles.

The present invention relates to aspects of the system for driving and controlling the brake discs in, for example, a spot-type automotive disc brake having at least one axially slidable disc. We have discovered that in such a disc brake the thermal dynamics during brake use and the periods immediately preceding and following same have significant implications for the design of the structures whereby the brake disc or discs are mounted on and driven by their mounting hub. We have established and have disclosed in prior applications the fact of the importance of controlling the movement of the brake disc or discs during the application of the brake and indeed before and after same. With this in mind we have described in prior applications spring systems providing for disc control in terms of disc tilt prevention together with less substantial functions including vibration and rattle control. And such systems are of undoubted benefit during use of such disc brakes.

However, we have further discovered that the thermal effect of brake application and the generation of substantial quantities of thermal energy at the friction surfaces of the brake, with the consequential rapid rise in temperature of the frictionally engaging components, notably the brake disc or discs themselves, causes significant effects, as follows.

The thermal expansion effect resulting from the heat generated during brake application is not entirely simple, we have discovered, due to the distinguishable effects of the expansion of the disc itself and of the radially-projecting drive elements or drive dogs. These two effects are both present in any given brake applications and thus there is an interactive effect which, we have found, can produce unsatisfactory effects in terms of disc stability in relation to disc and drive element constructions previously considered.

However, our research shows that there is a design approach which enables the adoption of a relatively simple construction which allows the dominant one of the two effects to be accommodated without a significant change in disc stability, while not precluding simultaneously providing additional measures to accommodate also the other one of the two effects.

Document GB-A-955430 (Goodrich) discloses an aircraft disc brake which comprises multiple interleaved annular discs and lining carriers "loosely mounted" (page 2, line 102) by means of lugs and slots between the aircraft wheels and the aircraft undercarriage structure. Thus, the disc brake is not a spot-type automotive disc brake as in the embodiments of the present invention, comprising, as it does, full annulars interleaved discs and lining carriers. Moreover, as stated on page 1 at lines 45 to 50, there is provided a rapid air flow past the friction surfaces of the brake assembly from which it may be inferred that thermal effects are not considered a problem and indeed there is no disclosure of such problems, such as the diameter change effects with which the present invention is concerned.

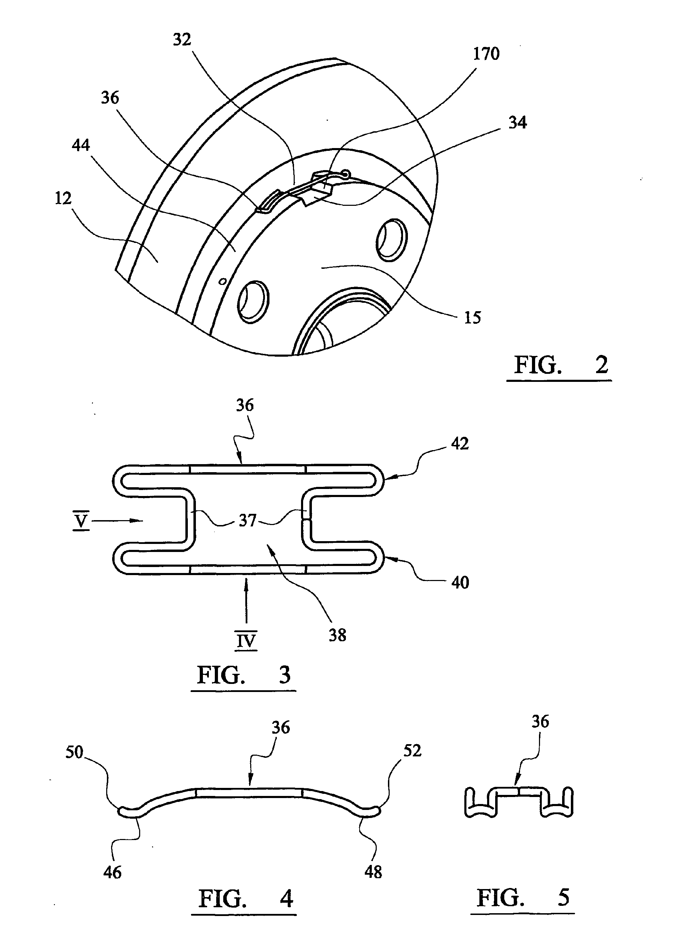

Document EP-A-0 266 262 (Bendix) discloses a spot type twin disc brake in which the discs are slidably mounted on respective rings or tubes which have slots for receiving separate coupling elements in the form of pins for transmitting the brake forces from the discs to the hub. Thus, it can be seen that this brake is not of the kind with which the embodiments of the present invention are concerned, namely a brake in which the brake disc is arranged to slide axially by virtue of the slidable interengagement of at least three drive elements provided on the brake disc and projecting at least generally radially with respect to the brake so as to be received in and to engage with at least three corresponding channels provided in a rotatable mounting. Notably, the only relevant embodiments in the EP 262 specification, namely those of Figs 4 and 5, use pins 42 received in corresponding slots for drive transmission, purposes, which arrangement is to be contrasted with that of the embodiments of the present invention in which drive elements project radially inwardly from the brake discs and indeed are formed integrally therewith. In other words, the EP 262 specification provides a substantially different arrangement in which non-integral drive pins project from a tube for drive transmission purposes and have little if anything in common with the inwardly-projecting integral drive elements of the embodiments of the present invention.

Other examples of axially slideable disc brake arrangements are described in US-A-3630320; US-A-3729067; US-A-3435924, US-A-6135247, and WO 00/66907.

An object of the present invention is to provide a method and apparatus applicable to disc brakes of the kind comprising axially slidable discs, and particularly to spot-type automotive disc brakes of this kind, in which improvements in relation to one or more of the factors discussed above are provided, or indeed improvements generally.

According to the invention there is provided a method and apparatus as defined in the accompanying claims.

In embodiments of the invention described below an arrangement is adopted in which the channels provided in the inner or outer mounting hub for the brake disc or discs have circumferentially-facing side faces (which effect driving of the brake disc in use) which are generally planar and parallel to each other so that the width of the channel (which accommodates the drive elements) is generally uniform at differing radial distances from the axis of rotation, that is arranged so that the dominant thermal effect in relation to sudden temperature changes in the disc upon brake application (which causes radially outward movement of the drive elements with respect to the hub due to the differential thermal effect) does not affect or change the clearance (due to tolerances) between the drive elements and their channels. In this way, the structure is rendered thermally less responsive, if not neutral, to the thermal effect of braking.

The provision of such planar, generally para11e7., eircumferentially-facirig side faces of the grooves, channels or keyways in the brake disc drive hub or ring has, in the described embodiments, the above-mentioned effect of significantly neutralising the expansion and contraction effect of thermal changes on the annular brake disc itself, but there is a further thermal effect which (though less significant in magnitude of effect) is in some cases large enough to make it worthwhile taking design steps to offset it. This factor concerns the expansion of the drive elements or keys themselves.

In the embodiments, the contact between the drive elements and their channels is effected through an arrangement whereby line contact is achieved, this being done in one convenient way by the provision of convex formations at the opposite (circumferentially spaced) ends of the drive elements.

In this way, the apex of each convex formation serves to make line contact (of preferably only moderate line thickness) with the side walls of the drive channels. As a result of this arrangement, the friction existing between the drive elements and the side walls of the channels within which they slide is effectively minimised so that the axial sliding movement of the brake disc or discs is thereby promoted and the general operation of the disc brake thereby enhanced.

It bears repeating that the described embodiments of the invention serve to enable the free sliding movement (in a controlled manner) of the disc or discs of a disc brake so that the several significant brake-operating advantages of such a system (such as reduced operating pressure where two or more discs are used, and enhanced ABS operation) can be achieved, while providing a cost effective means (mere minor hardware design changes) which offset the otherwise resulting thermal effects of braking action.

A further aspect of the embodiments of the invention described below is in addition to the provision of means for enabling line contact between the drive elements and their respective drive channels on a parallel-sided channel profile basis so that the radial position of the line contact (when varied by thermal change) does not significantly affect the degree of lost motion or cumulative tolerances in the system. This addition is to provide for some means whereby these beneficial features are combined with a means for thermally offsetting the effect of actual thermal expansion (and contraction) of the drive elements themselves within their drive channels. In this regard, it is relevant that the drive elements (being integrally constructed with the brake disc) tend to rise in temperature more rapidly than the hub structure defining the channels with which they cooperate, due simply to the fact that the latter structure is further removed from the source of heat (the brake disc itself), and can receive heat therefrom only via the drive elements themselves. Therefore, on initiation of braking, there tends to develop a thermal differential between the drive elements and their channels, with the drive elements being higher in temperature and therefor thermally expanding more as a result. Accordingly, in accordance with this aspect of the invention, provision is made to accommodate such differential thermal expansion by adopting a slight modification of the generally parallel-sided channel structure (which as explained above accommodates the thermal enlargement of the effective diameter of the brake disc itself), and to do so by providing a slight inward taper (as against the parallel relationship which would otherwise be provided) sufficient to accommodate the progressive differential thermal expansion of the drive elements as the brake disc enlarges in diameter and causes the drive elements to be effectively bodily moved slightly with respect to their "braking-from-cold" locations within the channels. Such an (inward taper) arrangement applies to a disc brake having a central drive hub with a fixed caliper straddling the outer periphery of the brake disc or discs. In the case of the converse arrangement with an annular outer drive member with radially-inwardly facing channels to receive radially outwardly-extending drive members, the latter will be caused by the thermal expansion of the disc to be moved inwardly with respect to the drive channels so that the divergence of the latter (from their parallel relationship) needs to be in the opposite direction ie towards the base of the grooves or channels, whereby removal of the drive elements from their annular drive member will usually need to be by an axial sliding movement.

It will be understood that the above-described features of the embodiments, relating to the generally parallel-sided drive channel format in cooperation with drive elements adapted for line contact with the channel walls, and the provision of some degree of wall taper or divergence to accommodate drive element differential expansion, may be provided simultaneously in a single embodiment, but not necessarily so and some degree of technical benefit is obtainable from all three concepts even where not used in mutual cooperation.

Embodiments of the invention will now be described by way of example with reference to the accompanying drawings in which:
Figure 1 shows a diagrammatic representation of the thermal and related mass aspects and dynamic aspects of a spot-type disc brake having resilient means adapted to act between a relatively massive hub and a pair of axially slidable brake discs;
Figures 2, 3, 4 and 5 show a first embodiment of the invention, namely a perspective view of a portion of a brake disc and hub assembly with associated resilient means acting therebetween, and a plan view and a side elevation and an end elevation view respectively of the closed loop format wire spring which constitutes the resilient means, the directions of viewing of the spring being indicated by viewing arrows IV and V in the usual way;
Fig 6 shows on a larger scale a perspective view of a annular brake disc incorporating five radially-inwardly projecting drive elements or keys;.
Fig 7 shows an isometric view of a corresponding mounting or hub for the brake disc or Fig 6 and showing the corresponding grooves or keyways or channels to receive the drive elements or keys;
Fig 8 shows an elevation or plan view of a brake disc and hub assembly differing from that of the embodiments of Figs 1 to 5 and 6 and 7 by having seven drive elements; and
Figs 9 and 10 show, on a larger scale, elevation or plan views of cooperating portions of a brake disc and a corresponding drive hub with the interconnecting drive element shown in operative relation to its corresponding groove or keyway, Fig 9 showing one embodiment and Fig 10 a further embodiment.
Fig 11 shows, on a still larger scale, a portion of a further embodiment of the invention corresponding to the drive element and channel portions of the disc brake assemblies seen in Figs 9 and 10, showing details of the profiles of the surfaces of the drive element which engages corresponding surfaces of its respective drive channel.

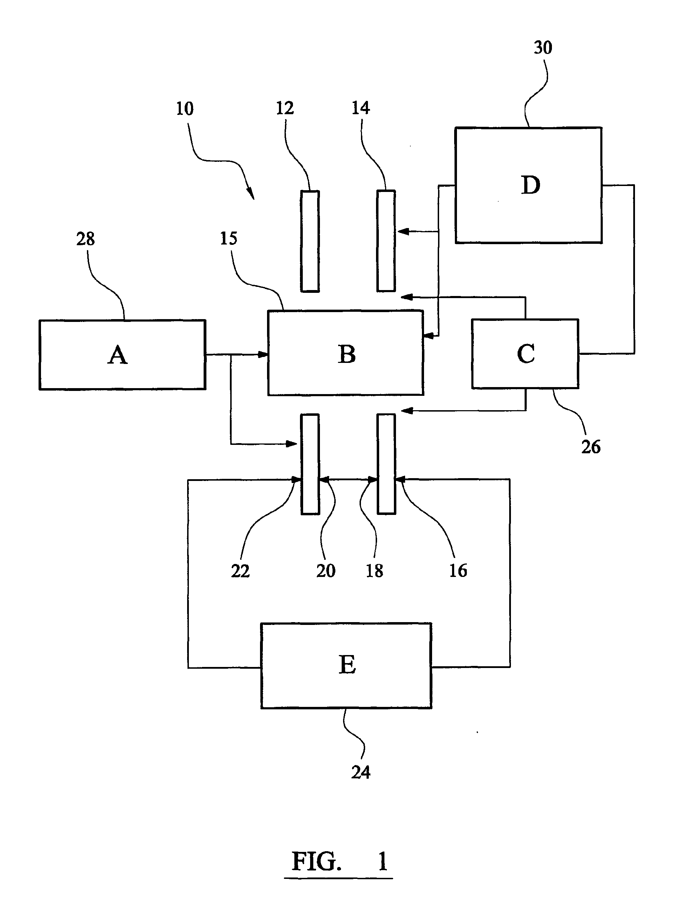

In Fig 1 the thermal and related mass aspects, which will be referred to and described more fully below, are indicated by references A to E in which:
A refers to the Thermal Differential;
B refers to the Relatively Massive Hub;
C refers to the Spring Effect;
D refers to the Uniform Control of Dynamics; and
E refers to the Localised Spot-Type brake effect.

As shown in Fig 1 a spot-type automotive disc brake 10 comprises rotatable brake discs 12, 14, a rotatable mounting or hub 15 for the discs 12, 14 to permit such rotation and which is adapted to drive the brake discs and to have exerted thereon a braking effect by the brake discs when disc brake 10 is actuated.

Two pairs of friction elements indicated at 16, 18 and 20, 22 are adapted to frictionally engage braking surfaces on opposite sides of brake discs 12, 14 to effect braking on actuation of actuation means 24 therefor. Brake discs 12, 14 are axially slidable in use with respect to mounting hub 15 therefor under the action of friction elements 16, 18 and 20, 22 and actuation means 24 during braking.

Resilient means 26 is provided at circumferentially spaced positions around brake discs 12, 14 and is adapted to act between the brake discs and the mounting therefor at said positions. The mounting of the resilient means 26 with respect to the brake disc 12, and on same, is such that the resilient means slides axially with the disc.

Also shown in Fig 1 at 28 is an indication of the thermal differential which exists between rotatable mounting or hub 15, which has a relatively massive construction, and the brake discs 12, 14 at which actuation means 24 causes a localised spot-type braking effect.

Likewise shown in Fig 1 at 30 is the uniform control of dynamics D (in relation to axial movement of the brake discs 12, 14), which is a desideratum in relation to the function of resilient means 26 acting between hub 15 and brake discs 12, 14, as discussed above. In other words, and in particular in the case of brakes including multiple discs, it is desirable for the axial movement of the individual discs to be controlled in a uniform manner with the springs providing a uniform effect over the operating range of movement.

Turning now to the embodiment of Figs 2 to 5, this will be described with reference to the general structure shown in Fig 1 in which the rotatable mounting or hub 15 and one of the axially slidable brake discs 12 is shown as part of an assembly which may comprise one, two or more discs and an associated hub, as shown diagrammatically in Fig 1. It is to be understood that the purely diagrammatic representation shown in Fig 1 is intended to be simply a convenient reference base for the technically competent person, for purposes of description, detailed structures being shown in the remaining figures.

In the embodiment of Figs 2 to 5, the resilient means which is provided at circumferentially spaced positions around the brake discs and which is adapted to act between the brake disc 12 and the mounting for the brake disc 12 at those positions itself comprises mounting means for the resilient means (in the form of a spring or springs) which is adapted to mount the resilient means at these circumferentially spaced positions on the brake disc or discs, so that when the resilient means is so mounted it applies a resilient bias directed from the mounting of the resilient means on the disc to the rotatable mounting or hub on which the disc is mounted. The resilient bias, or force acting between the disc 12 and hub is provided and generated by virtue of the resilience of the resilient means and deformation or bending of the resilient means. As will be understood by the person skilled in the art, deformation or bending of resilient means induces stress, for example torsional stress in the case where the resilient means are twisted, this induced stress in the resilient means generating forces acting in the opposite direction to the deformation or bending and tending to counter the deformation or bending.

As shown in Fig 2, disc 12 is mounted on hub 15 by means of a series of inwardly projecting keys or drive formations or elements 32 of inwardly tapering format which enter correspondingly-profiled keyways 34 or grooves formed in the hub. In this embodiment, the resilient means 26 is constituted by a wire spring 36 of generally endless loop format and having two inwardly-directed portions defining a waist 38 adapted to fit around key 32 so that the lateral side portions 40, 42 of the spring can act on the outwardly-facing surface 44 of hub 15 at each side of the disc. The portions 37 of the spring 36 within the waist 38 bear against the disc 12 so that the spring 36 provides a force between the disc 12 and the hub 15. For this purpose, the side portions 40, 42 have smoothly-curved contact profiles 46, 48 with upturned ends 50, 52.

As shown in fig 4, spring 36 has (inside elevation) a generally convex profile between its upturned ends 50, 52 whereby, by virtue of its wire spring construction, it exerts the required resilient effect between disc 12 and hub 15.

In this embodiment, four keys and corresponding springs are provided per disc. Each spring is retained by its respective key or drive element 32.

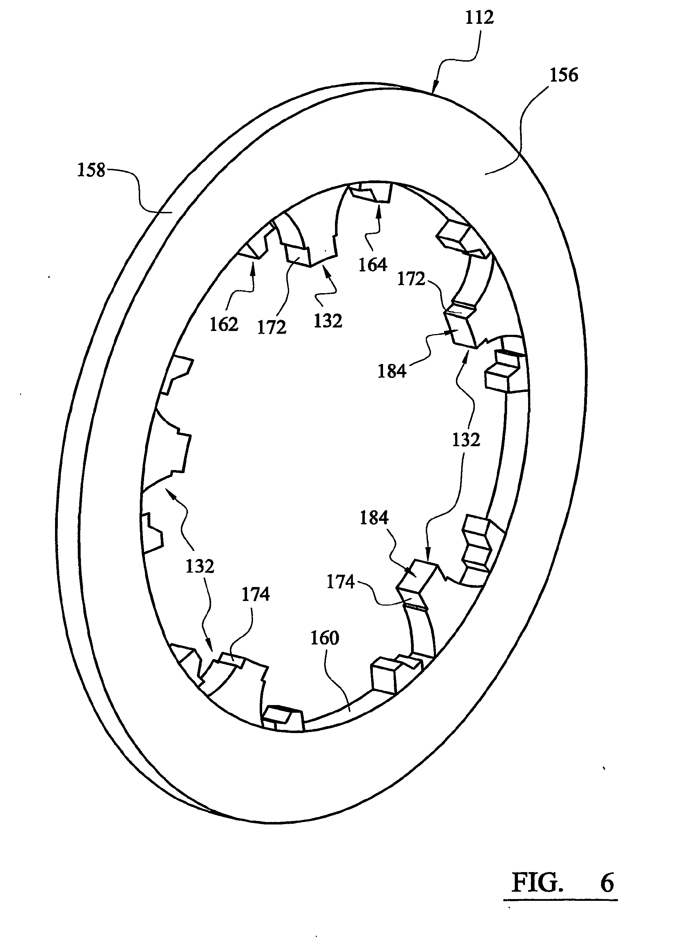

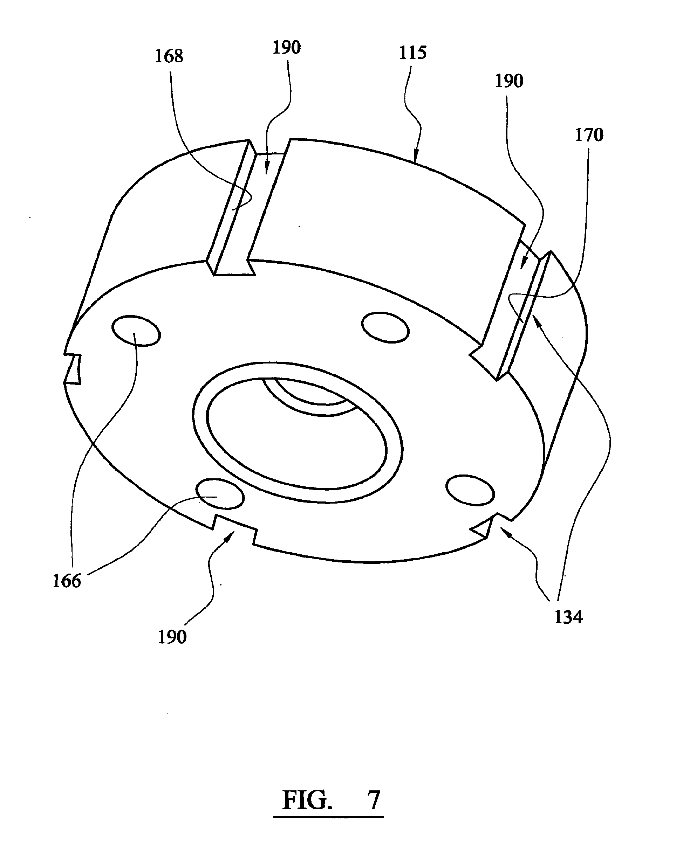

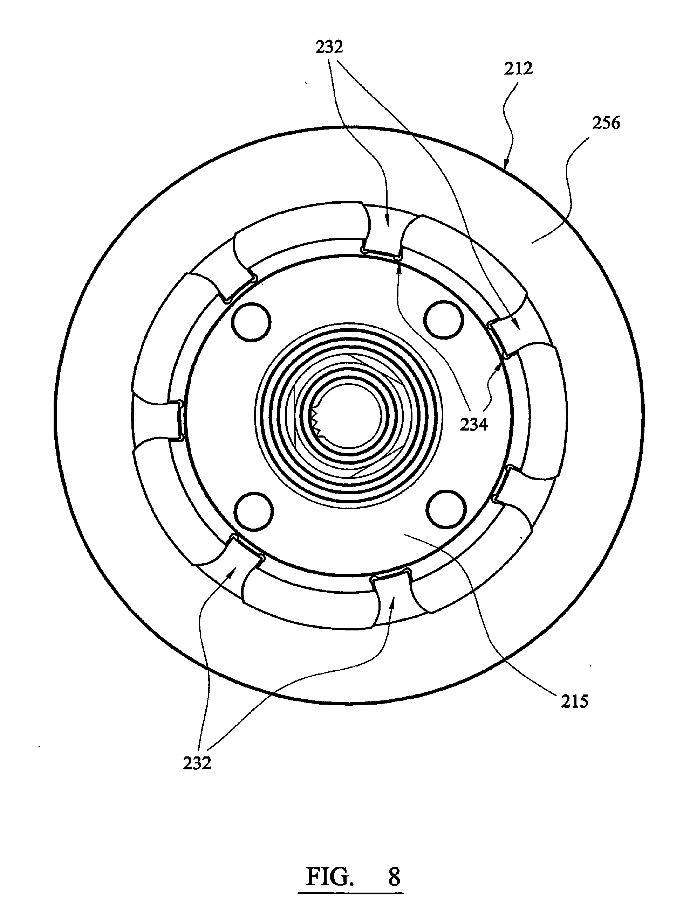

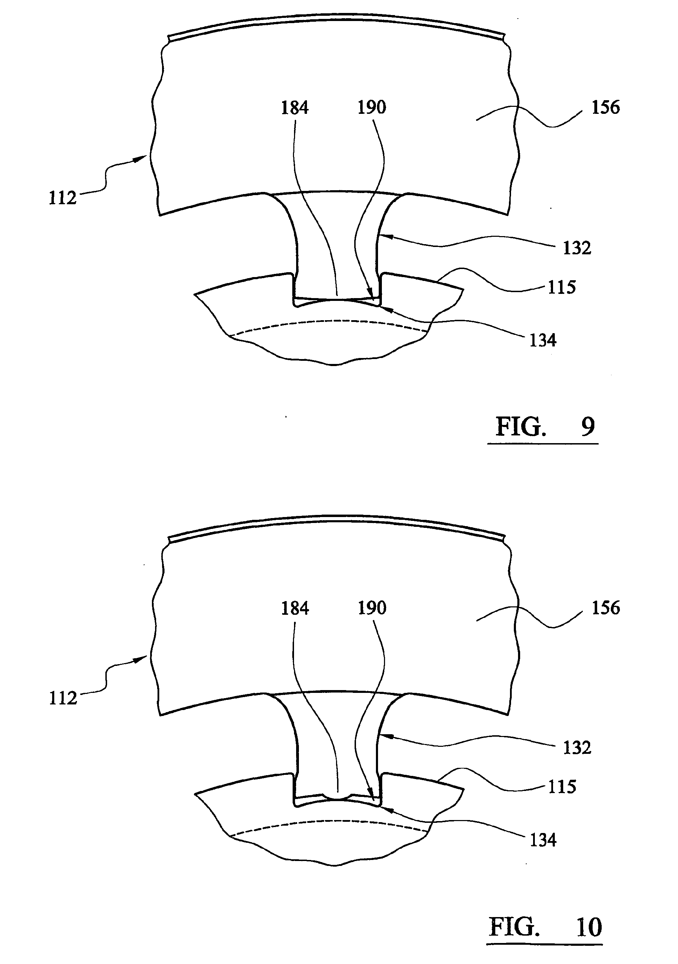

Having thus described the general construction of disc brake 10 and its mode of operation, we turn now to the embodiments of the invention illustrated in Fig 6 to 11. Of these, Figs 6 and 7 form one embodiment, Fig 8 a modification thereof, and Figs 9 and 10 and 11 illustrate the detailed structure of the drive elements (forming three distinct embodiments) which are applicable in the structures illustrated in Figs 6 and 7 and/or Fig 8.

In the embodiment of Figs 6 and 7, parts corresponding to those of the embodiment of Figs 1 to 5 are numbered accordingly, but with an increase of 100 in the actual reference numeral used. Thus, in Fig 6, the brake disc shown corresponds to brake disc 12 in Figs 1 to 5 and is numbered 112 accordingly. Likewise, the hub shown in Fig 7 corresponds to hub B or 15 in Figs 1 to 5, and is thus identified as hub 115. Thus, in accordance with the foregoing description, brake disc 112 is, in use, axially slidable with respect to mounting hub 115 by virtue of the slidable interengagement of the inwardly projecting keys or drive formations or elements 132 provided on brake disc 112, and which project generally radially with respect to the brake disc and are received in and engage with corresponding keyways or grooves or channels 134 in hub 115.

As shown in Fig 6, brake disc 112 is of the usual annular form having opposed axially-facing braking surfaces 156 bounded by radially outer and radially inner edges 158, 160 respectively. Drive elements 132 are formed at equal intervals around inner edge 160 and their individual structure will be discussed in more detail below. Suffice it to say for the present that the drive elements are formed integrally with the structure of disc 112 and are each provided with pairs of (likewise radially-inwardly projecting) spring location formations 162 164 to cooperate with the structure of resilient means such as wire spring 36 mounted on disc 112 for cooperation with hub 115.

Both disc 112 and hub 115 are formed as metallic castings utilising alloyed or non-alloyed metallic materials in accordance with established practice for brake disc and mounting hub construction. Hub 115 is provided with four bores 166 to receive road wheel-mounting studs (not shown) whereby a conventional automobile tyre and rim/disc assembly can be mounted thereon in the conventional way using threaded wheel-mounting nuts (not shown).

It will be noted that the radial length or extent of drive elements 132 as shown in Figs 6 and 7 is significantly greater than the corresponding extent of drive elements 32 in Fig 2. This disparity is of no particular significance and the structures shown in Figs 6 to 10 are representative of the intended structure for the preferred embodiments of the invention at the date of filing of the present application.

Turning now to the details of the structure defining the interaction between the drive elements 132 and their respective channels 134, it will be seen that channels 134 in the rotatable hub or mounting 115 comprise axially-extending and circumferentially-spaced side faces 168, 170 which are generally planar and parallel to each other, so far as concerns each pair of such faces for any given one channel 134.

So far as drive elements 132 are concerned, these have opposite side faces 172, 174 adapted to make contact with the side faces 168, 170 of channels 134 along a line or band 176 of contact.

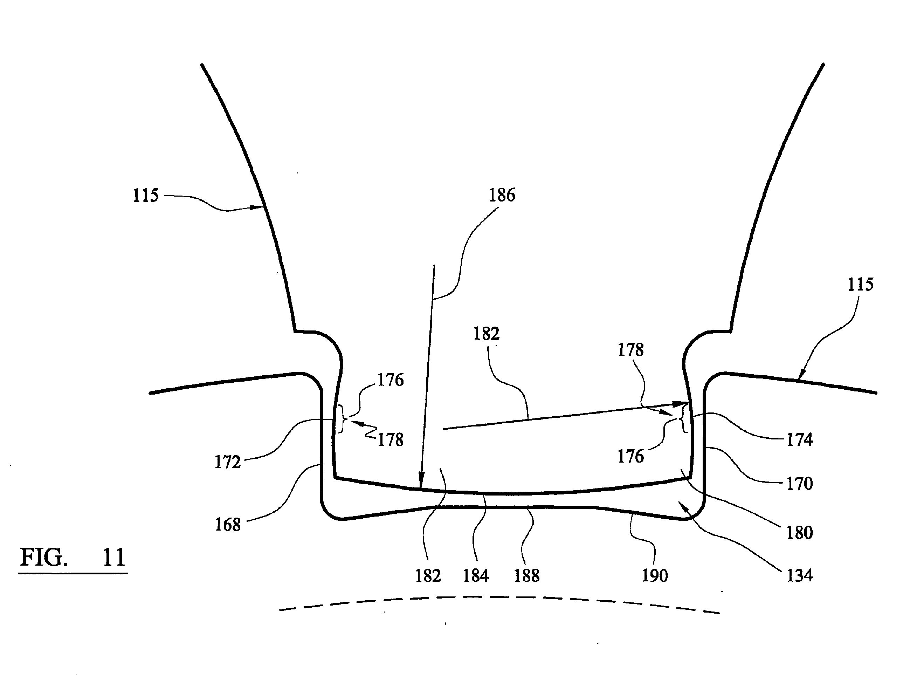

In order to achieve such line or band of contact, the drive elements are provided with side faces having a projecting form as viewed axially of the brake disc 112, said projecting form being a convex part-cylindrical form as best seen in Fig 11 at the locations identified by reference numeral 178.

Although not shown with such feature in Fig 11, it is to be noted that the channels 134 may be formed with a slight taper in the direction needed to accommodate expansion of the drive elements 132 as the brake disc 112 expands (as its temperature rises) and the drive elements 132 move outwards with the brake disc on heating of the brake disc. Thus, in this embodiment, the taper is in the direction such that the channels 134 are of slightly reduced circumferential width at their base or innermost end as compared with their open or radially outermost end.

In Fig 11, it must be understood that channel 134 is shown, purely for purposes of clarity of illustration and identification by means of reference numerals lead lines, as being significantly (or at least visibly) wider than its corresponding drive element 132 so that the contacting surfaces between the drive element and the channel are clearly separately visible. It must be understood that in actual practice, the channel 134 and the drive element 132 therein are proportioned in the manner indicated in Figs 9 and 10 so as to be in actual face-to-face contact and the gaps visible between the drive element 132 and the channel 134 in Fig 11 are purely to enable the relevant surfaces to be clearly seen and identified by means of reference numerals and lead lines.

In Fig 11 the convex profile 178 of side faces 172, 174 of the drive portion 180 of drive element 132 is clearly seen and line or band 176 of contact with the channel side faces 168, 170 is clearly shown at 176 as having a certain modest width based on the convex cylindrical profile shown which has a radius as indicated at 182 of 10.0 cm. This is a machined surface for precision contact with the machined parallel or slightly tapering side faces 168 and 170 of channel 134. The same radius applies in respect of side face 172.

As regards the end surface 184 of drive portion 180 of drive element 132, this has a likewise convex and part-cylindrical profile having a radius indicated at 186, of 43.5 cm. Surface 184 makes band-contact with the raised and flattened central portion 188 of the base 190 of channel 134. When, following braking, brake disc 112 becomes hot, the radially-outward expansion of the disc causes partial or complete disengagement of surfaces 184 and 188, thereby reducing frictional forces resisting axial sliding movement of the brake disc.

In the embodiment of Fig 8 it will be noted that there are provided 7 drive elements 232 which are slidably engaged in 7 corresponding drive channels 234. Otherwise, this embodiment is constructed substantially as described above. An important aspect of this embodiment relates to the prime number of drive elements and channels provided. It has been found that the performance of the assembly is enhanced by utilising a number of drive elements and channels which is a prime number greater than 2 and less than 11. The preferred numbers are 5 and 7, although the four drive elements used in the embodiment of Figs 1 to 5 is certainly acceptable for certain uses.

In the embodiment of Fig 11, the drive element 132 is shown on an enlarged scale from an embodiment corresponding to that shown in Fig 6 having five drive elements each of width (measured between the convex side edge faces) of 12.00 mm with a tolerance of from -0.207 to -0.137 mm.

In the case of a brake disc having seven drive elements, these are of larger width of 14.00 mm with a tolerance range from -0.222 to -0.152 mm. The corresponding channel widths are 12.0 and 14.0 mm with a tolerance range of +0.000 to +0.110 mm. The circumferential position tolerance for the drive elements and channels is 0.018 mm in both cases.

Turning now to the features shown in Figs 9 and 10 which differ from those described above in relation to Fig 11, it will be seen that generally the structure and arrangement is similar however some differences in profile exist in relation to the mutually-facing (inwardly and outwardly) surfaces of the drive element end and the channel base. In the Fig 9 embodiment, the drive element has a generally convex end surface similar to that of Fig 11 whereas in Fig 10, it is shown as having a fairly short radius dimple or convex projection 192 whereby the line of contact with the channel base is narrowed from the band contact in Fig 9 to a specific line. Otherwise in Figs 9 and 10, parts corresponding to those of Fig 11 are numbered accordingly.

In use of the embodiments, as will be apparent from the general description above, thermal energy generated during braking causes heating of braking surfaces 156 and thus of disc 112 causing slight outward movement of drive elements 132 within channels 134 but this movement is neutralised in terms of its effect on the driving engagement between the drive elements and the channels and the stability of the disc by virtue of the profile of each of the drive channel walls.

## Claims

1. A method of mounting a brake disc (112) in a spot-type disc brake (10), the disc brake (10)comprising:
a) at least one rotatable brake disc (112);
b) a rotatable mounting (115) for said brake disc (112) to permit such rotation and which is adapted to drive said brake disc (112) and to have exerted thereon a braking effect by said brake disc (112) when the disc brake is actuated;
c) at least one pair of friction elements (16,18,20,22) adapted to frictionally engage braking surfaces on opposite sides of said brake disc (112) to effect braking on actuation of actuation means (24) therefor; and
d) said brake disc (112) being axially slidable in use with respect to said mounting (115) therefor under the action of said friction elements (16,18,20,22) and said actuation means (24) therefor during braking;
e) causing said brake disc (112) in use to axially slide with respect to said mounting (115) by virtue of the slidable interengagement of at least three drive elements (132) provided on said brake disc (112) and projecting at least generally radially with respect to said brake (10) to be received in and to engage at least three corresponding channels (134) provided in said rotatable mounting (115)and defined by axially-extending circumferentially-spaced side faces (168,170) which are planar and generally parallel having a generally uniform width between each other, or with a slight taper in the direction needed to accommodate expansion of said drive elements (132) as said brake disc (112) expands and said drive elements (132) move with said brake disc (112) on heating of said brake disc (112); and
f) matching the width of the channel (134) between said' side faces (168,170) at differing radial distances from the axis of rotation to accommodate the dominant thermal effect in relation to sudden temperature changes in the disc (112) and drive elements (132) upon brake application, which cause relative radial movement and circumferential expansion of the drive elements (132) within the drive channels (134), to thereby maintain the clearance between the drive elements (132) and the side faces (168,170) of the channels;
**characterised by** said method comprising providing said drive elements (132) on said brake disc (112) having opposite side faces (172,174) with a projecting form as viewed axially of said brake disc (112) such that the opposite side faces (172,174) of the drive elements are adapted to make at a radial position and distance from the axis of rotation a line or band contact (176) with said side faces (168,170) of said channels (134).

2. A method according to claim 1 **characterised by** providing said side faces (172,174) of said drive elements (132) having a convex part-cylindrical form.

3. A spot-type disc brake (10), the disc brake (10) comprising:
a) at least one rotatable brake disc (112);
b) a rotatable mounting (115) for said brake disc (112) to permit such rotation and which is adapted to drive said brake disc (112) and to have exerted thereon a braking effect by said brake disc (112) when the disc brake (10) is actuated;
c) at least one pair of friction elements (16,18,20,22) adapted to frictionally engage braking surfaces on opposite sides of said brake disc (112) to effect braking on actuation of actuation means (24) therefor; and
d) said brake disc (112) being axially slidable in use with respect to said mounting (115) therefor under the action of said friction elements (16,18,20,22) and said actuation means (24) therefor during braking;
e) said brake disc (112) being adapted in use to axially slide with respect to said mounting (115) by virtue of the slidable interengagement of at least three drive elements (132) provided on said brake disc (112) and projecting at least generally radially with respect to said brake (10) to be received in and to engage at least three corresponding channels (134) provided in said rotatable mounting (115) defined by axially-extending circumferentially-spaced side faces (168,170) which are planar and generally parallel having a generally uniform width between each other, or with a slight taper in the direction needed to accommodate expansion of said drive elements (132) as said brake disc (112) expands and said drive elements (132) move with said brake disc (112) on heating of said brake disc (112); and
f) said channels in said rotatable mounting (115) having a width between said side faces (168,170) at differing radial distances from the axis of rotation which is arranged to accommodate and match the dominant thermal effect in relation to sudden temperature changes in the disc (112) and drive elements (132) upon brake application, which causes relative radial movement and circumferential expansion of the drive elements (132) within the drive channels (134), and thereby substantially maintain the clearance between the drive elements (132) and the side faces (168, 170) of the channels;
**characterised by** said drive elements (132) on said brake disc (112) having opposite side faces (172,174) having a projecting form as viewed axially of said brake disc (112) such that the opposite side faces (172,174) of the drive elements are adapted to make at a radial position and distance from the axis of rotation a line or band contact (176) with said side faces (168,170) of said channels (134).

4. A brake (10) according to claim 3 **characterised by** said side faces (172,174) of said drive elements (132) having a convex part-cylindrical form.

## Patentansprüche

1. Verfahren zum Anbringen einer Bremsscheibe (112) in einer Teilbelag-Scheibenbremse (10), wobei die Scheibenbremse (10) umfasst:
a) wenigstens eine drehbare Bremsscheibe (112);
b) eine drehbare Anbringung (115) für die Bremsscheibe (112), die diese Drehung zulässt und die so eingerichtet ist, dass sie die Bremsscheibe (112) antreibt und durch die Bremsscheibe (112) eine Bremswirkung darauf ausüben lässt, wenn die Scheibenbremse betätigt wird;
c) wenigstens ein Paar Reibelemente (16, 18, 20,22), die so eingerichtet sind, dass sie in Reibeingriff mit Bremsflächen an einander gegenüberliegenden Seiten der Bremsscheibe (112) kommen, um bei Betätigung einer Betätigungseinrichtung (24) für sie Bremsen zu bewirken; und
d) wobei die Bremsscheibe (112) in Funktion durch die Wirkung der Reibelemente (16, 18, 20,22) und der Betätigungseinrichtung (24) für sie beim Bremsen axial in Bezug auf die Anbringung (115) für sie verschoben werden kann;
e) Veranlassen, dass die Bremsscheibe (112) in Funktion axial in Bezug auf die Anbringung (115) gleitet, und zwar aufgrund des gegenseitigen Eingriffs von wenigstens drei Antriebselementen (132), die an der Bremsscheibe (112) vorhanden sind und wenigstens im Allgemeinen radial in Bezug auf die Bremse (10) so vorstehen, dass sie in wenigstens drei entsprechenden Kanälen (134) aufgenommen werden und mit ihnen in Eingriff kommen, wobei diese in der drehbaren Anbringung (115) vorhanden sind und durch axial verlaufende, in Umfangsrichtung beabstandete Seitenflächen (168, 170) gebildet werden, die plan und im Allgemeinen parallel sind und eine im Allgemeinen gleichmäßige Breite zwischen einander aufweisen, oder eine geringfügige Verjüngung in der Richtung aufweisen, die erforderlich ist, um Ausdehnung der Antriebselemente (132) zu ermöglichen, wenn sich die Bremsscheibe (112) ausdehnt und sich die Antriebselemente (132) bei Erwärmung der Bremsscheibe (112) mit der Bremsscheibe (112) bewegen.
f) Anpassen der Breite des Kanals (134) zwischen den Seitenflächen (168, 170) an unterschiedliche radiale Abstände zu der Drehachse, um den vorherrschenden thermischen Effekt in Bezug auf plötzliche Temperaturänderungen der Scheibe (112) und der Antriebselemente (132) beim Bremsen auszugleichen, die relative radiale Bewegung und Ausdehnung der Antriebselemente (132) in den Antriebskanälen (134) in Umfangsrichtung verursachen, und so den Abstand zwischen den Antriebselementen (132) und den Seitenflächen (168, 170) der Kanäle aufrechtzuerhalten;
**dadurch gekennzeichnet, dass** das Verfahren umfasst, dass die Antriebselemente (132) an der Bremsscheibe (112) bereitgestellt werden, die einander gegenüberliegende Seitenflächen (172, 174) mit einer, axial zu der Bremsscheibe (112) gesehen, vorstehenden Form aufweisen, so dass die einander gegenüberliegenden Seitenflächen (172, 174) der Antriebselemente so eingerichtet sind, dass sie an einer radialen Position und in Abstand zu der Drehachse in Linien- oder Streifenkontakt (176) mit den Seitenflächen (168, 170) der Kanäle (134) kommen.

2. Verfahren nach Anspruch 1, **gekennzeichnet durch** Bereitstellen der Seitenflächen (172, 174) der Antriebselemente (132) mit einer konvexen teilzylindrischen Form.

3. Teilbelagscheibenbremse (10), wobei die Scheibenbremse (10) umfasst:
a) wenigstens eine drehbare Bremsscheibe (112);
b) eine drehbare Anbringung (115) für die Bremsscheibe (112), die diese Drehung zulässt und die so eingerichtet ist, dass sie die Bremsscheibe (112) antreibt und durch die Bremsscheibe (112) eine Bremswirkung darauf ausüben lässt, wenn die Scheibenbremse (10) betätigt wird;
c) wenigstens ein Paar Reibelemente (16, 18, 20, 22), die so eingerichtet sind, dass sie in Reibeingriff mit Bremsflächen an einander gegenüberliegenden Seiten der Bremsscheibe (112) kommen, um bei Betätigung einer Betätigungseinrichtung (24) für sie Bremsen zu bewirken; und
d) wobei die Bremsscheibe (112) in Funktion durch die Wirkung der Reibelemente (16, 18, 20, 22) und der Betätigungseinrichtung (24) für sie beim Bremsen axial in Bezug auf die Anbringung (115) für sie verschoben werden kann;
e) wobei die Bremsscheibe (112) so eingerichtet ist, dass sie in Funktion axial in Bezug auf die Anbringung (115) gleitet, und zwar aufgrund des gegenseitigen Eingriffs von wenigstens drei Antriebselementen (132), die an der Bremsscheibe (112) vorhanden sind und wenigstens im Allgemeinen radial so in Bezug auf die Bremse (10) so vorstehen, dass sie in wenigstens drei entsprechenden Kanälen (134) aufgenommen werden und mit ihnen in Eingriff kommen, wobei diese in der drehbaren Anbringung (115) vorhanden sind und durch axial verlaufende, in Umfangsrichtung beabstandete Seitenflächen (168, 170) gebildet werden, die plan und im Allgemeinen parallel sind und eine im Allgemeinen gleichmäßige Breite zwischen einander aufweisen, oder eine geringfügige Verjüngung in der Richtung aufweisen, die erforderlich ist, um Ausdehnung der Antriebselemente (132) zu ermöglichen, wenn sich die Bremsscheibe (112) ausdehnt und sich die Antriebselemente (132) bei Erwärmung der Bremsscheibe (112) mit der Bremsscheibe (112) bewegen.
f) wobei die Kanäle in der drehbaren Anbringung (115) eine Breite zwischen den Seitenflächen (112) in unterschiedlichen radialen Abständen zu der Drehachse haben, die so eingerichtet ist, dass sie den vorherrschenden thermischen Effekt in Bezug auf plötzliche Temperaturänderungen der Scheibe (112) und der Antriebselemente (132) beim Bremsen ausgleicht und anpasst, die relative radiale Bewegung und Ausdehnung der Antriebselemente (132) in den Antriebskanälen (134) in Umfangsrichtung verursachen, um so den Abstand zwischen den Antriebselementen (132) und den Seitenflächen (168, 170) der Kanäle im Wesentlichen aufrechtzuerhalten;
**dadurch gekennzeichnet, dass** die Antriebselemente (132) an der Bremsscheibe (112) einander gegenüberliegende Seitenflächen (172, 174) aufweisen, die, axial zu der Bremsscheibe (112) gesehen, eine vorstehende Form haben, so dass die einander gegenüberliegen Seitenflächen (172, 174) der Antriebselemente so eingerichtet sind, dass sie an einer radialen Position und in Abstand zu der Drehachse in Linien- oder Streifenkontakt (176) mit den Seitenflächen (168, 170) der Kanäle (134) kommen.

4. Bremse (10) nach Anspruch 3, **dadurch gekennzeichnet, dass** die Seitenflächen (172, 174) der Antriebselemente(132) eine konvexe teilzylindrische Form haben.

## Revendications

1. Procédé de montage d'un disque de frein (112) dans un frein à disque du type par points (10), le frein à disque (10) comprenant :
(a) au moins un disque de frein rotatif (112) ;
(b) une monture rotative (115) pour le dit disque de frein (112) afin de permettre cette rotation, et qui est prévue pour entraîner le dit disque de frein (112) et sur laquelle est exercé un effet de freinage par le dit disque de frein (112) lorsque le frein à disque est actionné ;
(c) au moins deux éléments de friction (16, 18, 20, 22) prévus pour venir en contact de friction avec des surfaces de freinage sur les côtés opposés du dit disque de frein (112) afin d'effectuer un freinage lors de l'activation de moyens de commande (24) des dits éléments de friction ; et
(d) le dit disque de frein (112) pouvant coulisser axialement en utilisation par rapport à sa dite monture (115) sous l'action des dits éléments de friction (16, 18, 20, 22) et de leurs dits moyens de commande (24) pendant le freinage ;
(e) le coulissement axial du dit disque de frein (112) en utilisation étant guidé par rapport à la dite monture (115) du fait de l'interaction coulissante d'au moins trois éléments d'entraînement (132) prévus sur le dit disque de frein (112) et en saillie au moins sensiblement radialement par rapport au dit frein (10) de manière à être reçus et à venir en prise dans au moins trois rainures correspondantes (134) prévues dans la dite monture rotative (115) et définies par des faces latérales s'étendant axialement et espacées circonférentiellement (168, 170) qui sont planes et sensiblement parallèles avec une largeur sensiblement constante entre elles, ou avec une légère convergence dans la direction nécessaire pour permettre la dilatation des dits éléments d'entraînement (132) lorsque le dit disque de frein (112) se dilate et que les dits éléments d'entraînement (132) se déplacent avec le dit disque de frein (112) lors de l'échauffement du disque de frein (112) ; et
(f) la largeur de la rainure (134) entre les dites faces latérales (168, 170) à différentes distances radiales de l'axe de rotation étant adaptée de manière à compenser l'effet thermique dominant en relation avec les changements de température brusques dans le disque (112) et les éléments d'entraînement (132) lors du serrage du frein, qui provoquent un mouvement radial relatif et une dilatation circonférentielle des éléments d'entraînement (132) dans les rainures d'entraînement (134), afin de maintenir le jeu entre les éléments d'entraînement (132) et les faces latérales (168, 170) des rainures ;
**caractérisé en ce que** le dit procédé comprend la formation des dits éléments d'entraînement (132) sur le dit disque de frein (112) avec les faces latérales opposées (172, 174) ayant une forme saillante en vue axiale du dit disque de frein (112) de sorte que les faces latérales opposées (172, 174) des éléments d'entraînement puissent créer, à une position radiale et à une certaine distance de l'axe de rotation, un contact linéaire ou de bande (176) avec les dites faces latérales (168, 170) des dites rainures (134).

2. Procédé selon la revendication 1, **caractérisé en ce que** les dites faces latérales (172, 174) des dits éléments d'entraînement (132) ont une forme partiellement cylindrique convexe.

3. Frein à disque du type à points (10), le frein à disque (10) comprenant :
(a) au moins un disque de frein rotatif (112) ;
(b) une monture rotative (115) pour le dit disque de frein (112) afin de permettre cette rotation, et qui est prévue pour entraîner le dit disque de frein (112) et sur laquelle est exercé un effet de freinage par le dit disque de frein (112) lorsque le frein à disque est actionné ;
(c) au moins deux éléments de friction (16, 18, 20, 22) prévus pour venir en contact de friction avec des surfaces de freinage sur les côtés opposés du dit disque de frein (112) afin d'effectuer un freinage lors de l'activation de moyens de commande (24) des dits éléments de friction ; et
(d) le dit disque de frein (112) pouvant coulisser axialement en utilisation par rapport à sa dite monture (115) sous l'action des dits éléments de friction (16, 18, 20, 22) et de leurs dits moyens de commande (24) pendant le freinage ;
(e) le dit disque de frein (112) en utilisation pouvant coulisser axialement par rapport à la dite monture (115) du fait de l'interaction coulissante d'au moins trois éléments d'entraînement (132) prévus sur le dit disque de frein (112) et en saillie au moins sensiblement radialement par rapport au dit frein (10) de manière à être reçus et à venir en prise dans au moins trois rainures correspondantes (134) prévues dans la dite monture rotative (115) et définies par des faces latérales s'étendant axialement et espacées circonférentiellement (168, 170) qui sont planes et sensiblement parallèles avec une largeur sensiblement constante entre elles, ou avec une légère convergence dans la direction nécessaire pour permettre la dilatation des dits éléments d'entrainement (132) lorsque le dit disque de frein (112) se dilate et que les dits éléments d'entrainement (132) se déplacent avec le dit disque de frein (112) lors de l'échauffement du disque de frein (112) ; et
(f) les dites rainures dans la dite monture rotative (115) ayant une largeur entre les dites faces latérales (168, 170) à différentes distances radiales de l'axe de rotation qui est prévue de manière à accepter et à compenser l'effet thermique dominant en relation avec les changements de température brusques dans le disque (112) et les éléments d'entraînement (132) lors du serrage du frein, qui provoque un mouvement radial relatif et une dilatation circonférentielle des éléments d'entraînement (132) dans les rainures d'entraînement (134), afin de maintenir sensiblement le jeu entre les éléments d'entraînement (132) et les faces latérales (168, 170) des rainures ;
**caractérisé en ce que** les dits éléments d'entraînement (132) sur le dit disque de frein (112) présentent des faces latérales opposées (172, 174) ayant une forme saillante en vue axiale du dit disque de frein (112) de sorte que les faces latérales opposées (172, 174) des éléments d'entraînement puissent créer, à une position radiale et à une certaine distance de l'axe de rotation, un contact linéaire ou de bande (176) avec les dites faces latérales (168, 170) des dites rainures (134).

4. Frein (10) selon la revendication 3, **caractérisé en ce que** les dites faces latérales (172, 174) des dits éléments d'entraînement (132) ont une forme partiellement cylindrique convexe.
